# EUROPÄISCHE PATENTSCHRIFT

(11) **EP 0 547 533 B1**
(45) Veröffentlichungstag und Bekanntmachung des Hinweises auf die Patenterteilung: **20.03.1996**
(21) Anmeldenummer: 92121212.2
(22) Anmeldetag: 12.12.1992
(51) Int. Cl.: D06N 7/00, A47G 27/02, B32B 5/26, D04H 13/00, D04B 21/14

(54) **Spannbarer textiler Fussbodenbelag**
Tensionable textile floor covering
Revêtement de sol textile pouvant être tendu

(30) Priorität: 18.12.1991 DE 9115657 U
(43) Veröffentlichungstag der Anmeldung: 23.06.1993
(73) Patentinhaber: AMOCO FABRICS ZWEIGNIEDERLASSUNG DER AMOCO DEUTSCHLAND GmbH, D-48599 Gronau (DE)
(72) Erfinder: Ladeur, Bernhard, W-4432 Gronau (DE); Elfering, Bernd, W-4422 Ahaus (DE)
(74) Vertreter: Hoffmeister, Helmut, Dr. Dipl.-Phys.

(56) Entgegenhaltungen:
- EP-A- 0 349 089
- EP-A- 0 511 469
- CH-A- 628 228
- DE-A- 2 453 675
- US-A- 3 834 978
- US-A- 4 242 394
- CHEMIEFASERN/TEXTILINDUSTRIE MAN-MADE FIBER Bd. 41, Nr. 10, Oktober 1991, FRANKFURT/MAIN, DE Seiten 1235 - 1236 , XP000233496 A. ADDEDO ET AL. 'Mehrschichtiger PP-Belag f r Autob den'

## Beschreibung

### Spannbarer textiler Fußbodenbelag

Die Erfindung betrifft einen spannbaren textilen Fußbodenbelag, bestehend aus einem Grundgewebe und einem Flor, der mit dem Grundgewebe verbunden ist und der das Grundgewebe auf der Trittseite bedeckt, die aus Polymerfasern im Tufting-Verfahren hergestellt sind, sowie aus einer Rückenschicht, die auf der dem Flor gegenüberliegenden Seite ("Rückseite") mit dem Grundgewebe verbunden ist und die den Trittkomfort bestimmt.

Textile Fußbodenbeläge der vorgehend definierten Art werden im Handel allgemein als "Tufting-Teppichboden" bezeichnet, wobei derartiger Teppichboden sowohl als Bahnenware als auch als Teppichfliesen verkauft und verlegt wird. Bei den Tufting-Teppichen wird die Textilfaser, meist Polyamid, nach dem Tuftingverfahren (Nadelflor-Technik) in das fertige Grundgewebe eingesetzt. Das Grundgewebe sorgt dabei für eine Dimensionsstabilität und der Flor für Aussehen und einen Teil des Trittkomforts (vgl. hierzu H. Kirchenberger, TUFTING-TECHNIK, Melliand Textilberichte, Heidelberg, 1975).

Weiterhin werden die vorgenannten Grundgewebe mit Flor in bekannter Weise rückseitig mit Naturkautschuk, Styrol-Butadien-Latices oder Polyurethanen beschichtet. Diese Schicht wird als Rückenschicht oder Teppich-Rückenbeschichtung bezeichnet. Sie ist im allgemeinen 2 bis 8 mm dick und trägt aufgrund ihrer elastomeren Eigenschaft wesentlich zum Trittkomfort bei. Die vorgenannten Rückenschichten werden in der Regel geschäumt und ergeben dann einen sogenannten Schaumrücken. Neben dem bereits genannten Trittkomfort sorgt der Schaumrücken auch für eine große Temperatur- und Schallisolierung und besitzt im allgemeinen auch eine relativ gute Lebensdauer.

Die Nachteile des bekannten Schaumrückens sind allerdings, daß bei der SB-Latexherstellung eine erhebliche Umweltbelastung in Kauf genommen werden muß, wobei auch die Luftbelastung bei der Latexbeschichtung einbezogen werden muß. Es hat sich gezeigt, daß die Bestandteile der SB-Latices bei bestimmten Personen, insbesondere Kindern, auch allergische Reaktionen hervorrufen können. Darüber hinaus macht die Zusammensetzung der Latices diese nicht-recyclefähig, so daß gebrauchte Teppiche nicht ohne weiteres zu entsorgen sind. Schließlich ist auch unangenehm, daß Reste des Latexrückens, ob dieser verklebt worden ist oder nicht, auf dem Fußboden zurückbleiben, wenn bei einer Neuverlegung von Teppichen der alte Teppich entfernt wird.

Bekannt ist aus der Zeitschrift Chemiefasern/Textilindustrie, Oktober 1991, Seite 1235 ein recyclingfähiger Bodenbelag für Autoböden, bei dem ein Polypropylen-Schaumschicht-Rücken durch eine Nadelfilzmatte aus Polypropylen ersetzt ist. Der Fachmann versteht unter einem "Filz" (vgl. BUURMAN, Lexikon der textilen Raumausstattung, Deutscher Fachverlag) ein Produkt, bei dem wirr durcheinanderliegende Chemiefasern unter Wirkung von Druck durch Walken zu einem Filz verbunden sind. Eine Verfestigung durch Stauchen, Klopfen und Pressen kommt ebenfalls in Frage. Ein Filz hat daher von vorneherein eine hohe Dichte, aber auch ein hohes Flächengewicht. Eine weitere Verfestigung ist nicht erforderlich.

Die obere Schicht ist dabei beispielsweise ein getufteter Teppich. Zwischen der Tufting-Schicht und dem Nadelfilz-Rücken ist eine Schicht aus einem modifizierten Polypropylen angeordnet. Die Polypropylen-Filzmatte wird unter dem Teppich mit einer Nadelfilzmaschine befestigt.

Weiterhin beschreibt US PS 3 834 978 einen synthetischen Teppichrücken, der in Verbindung mit getufteten oder genadelten Teppichen verwendet werden kann. Der Teppichrücken besteht aus einer ersten und einer zweiten Vliesschicht, die aus einem Nylon-(Polyamid-) Stapelfaser-Gemisch gebildet werden. Die Schichten werden vernadelt und mit Hilfe einer Hitzeverbindung mit dem Teppich verbunden (vgl. Anspruch 1).

Bevorzugt wird ein Teppichrücken (vgl. Spalte 2, Zeilen 59 ff), bei der eine Vliesstoff-Folie oder -Matte hergestellt wird, in der wirr luftgelegte Schnittfasern oder kardierte, garnetierte oder übereinandergelegte Folien verwendet werden, um ein Substrat zu bilden. Das so gebildete Substrat ist vernadelt zu einem Garngelege (Scrim). Dies kann auf der einen Seite des Substrates oder zwischen den Substraten geschehen. Die Verbindung geschieht durch Vernadeln. Eine Einfassung in einer Textilbindung ist nicht vorgesehen.

Es stellt sich demnach die Aufgabe, einen Textilverbundstoff für Fußbodenbeläge der eingangs genannten Art anzugeben,bei dem eine Rückenschicht vorhanden ist, die insgesamt mit dem Textilverbundstoff recyclefähig ist, von üblichen Allergenen frei ist und die trotzdem den gleichen Trittkomfort bietet wie ein Schaumrücken, und die außerdem eine hohe Abriebfestigkeit aufweist.

Diese Aufgabe wird gelöst bei einem spannbaren textilen Fußbodenbelag der eingangs genannten Art, der dadurch gekennzeichnet ist, daß die Rückenschicht ein Verbundstoff ist, der hauptanteilig aus einem Vliesstoff besteht, der in ein Bändchen-, Filament- oder Fasergarn-Gewebe oder -Gewirke eingefaßt ist und daß unter Anwendung einer die Recyclingfähigkeit des Fußbodenbelages nicht verhindernden Technik Grundgewebe und Rückenschicht miteinander verbunden sind.

Der erste Erfindungsgedanke besteht darin, den Latexrücken durch einen neuartigen Zweitrücken zu ersetzen, der mit dem Rohteppich zu verbinden ist und dieselben Gebrauchseigenschaften, insbesondere Trittkomfort, ergibt wie bekannte Schaum-Latexrücken. Ein weiterer Gedanke ist, daß die Materialien nach fachmännischem Ermessen insgesamt so aufeinander abgestimmt sind, daß sie nach dem Gebrauch zerkleinert werden können und in einem Recyclingverfahren, also beispielsweise durch Zerkleinern, Einschmelzen und erneutes Extrudieren, in eine andere Form überführt werden können, die den eingesetzten Rohstoff einem Zweitnutzen zuführt. Ausgeschlossen sei auch nicht, daß der eingesetzte Polymer-Kunststoff bis zum Monomer depolymerisiert und anschließend wieder polymerisiert wird.

Der Rücken besteht demnach aus einem Vliesstoff, welcher mit einem Gewebe oder Gewirke verbunden oder vermascht wird, wodurch der Vliesstoff in Längs- oder in Längs - und Querrichtung verstärkt wird, bei Bedarf elektrostatisch ableitfähig ausgerüstet und entsprechend in Haptik und Optik textil gestaltet werden kann. Dieser Verbundstoff kann als Rückenschicht für textile Fußbodenbeläge als Ersatz für die bisher üblichen Schaum- oder Kompaktschaumrücken eingesetzt werden, ohne die Gebrauchseigenschaften, insbesondere den Trittkomfort, zu beeinträchtigen. Dabei wird durch die Einfassung in eine textile Verbindung auch der Verschleiß vermindert und die Verarbeitbarkeit, insbesondere die Verbindung zum Grundgewebe, erleichtert.

Techniken zur Verbindung des Fußbodenbelages mit dem Rükken, die einer Recyclingfähigkeit nicht entgegenstehen, sind beispielsweise Verkleben mit polymeren Pasten derselben Polymerart wie der übrige Fußbodenbelag, Aufsteppen, Vernähen und dergleichen bekannte Techniken, wobei Materialien verwendet werden, die die Recyclingfähigkeit nicht behindern.

Um einen ausreichenden Trittkomfort je nach Verlegesituation zu erzielen, wird vorgeschlagen, daß der Vliesstoff ein Flächengewicht von 100 bis 400 g/m und eine Dicke von 0,5 bis 4 mm aufweist.

Um den Vliesstoff antistatisch auszurüsten, wird vorgeschlagen, ihn mit leitfähigen Fasern zu durchmischen, die eine Herabsetzung des Oberflächen-Widerstandes auf wenigstens 10° Ohm bewirken. Dieser Vliesstoff ergibt in Verbindung mit einer leitfähigen Teppichkonstruktion einen erdableitfähigen Fußbodenbelag (z.B. für Computerräume.)

Der Vliesstoff kann grundsätzlich in verschiedener Weise hergestellt werden. Generell können alle recycle-kompatiblen Typen von polymeren Fasern und Fasermischungen genutzt werden. Geht man beispielsweise von der üblichen Herstellung von Spinnfaservliesen aus, so wird dieser in den Prozeßstufen " Öffnen - Mischen - Feinöffnen - Vliesbildung - Verfestigen" in eine handelsfähige Ware überführt.

Als Rohstoffe kommen sowohl Polyolefine (PP, PE) als auch Polyamide und Polyester infrage, also dieselben Materialien, aus denen auch der Vliesstoff hergestellt wird. Demnach kann sowohl der Pol, das Grundgewebe, der Verbundstoff für den Rücken und die notwendigen Klebemassen entweder aus einem einheitlichen Rohstoff (z.B. Polypropylen, Polyamid, Polyester), als auch aus Rohstoffkombinationen, die selbst oder mit Hilfe von geeigneten Zusätzen kompatibel gemacht werden, und anschließend durch Zerkleinern in eine erneut extrudierbare Form überführt werden können, hergestellt werden.

Weiterhin kann für den genannten Textilverbundstoff sowohl ein unverfestigter als auch ein verfestigter Vliesstoff eingesetzt werden. Ein unverfestigter Vliesstoff kann mittels eines Nähwirkverfahrens, z. B. durch das sogenannte Maliwatt-Verfahren, verfestigt werden. Es ist auch möglich, einen bereits verfestigten Vliesstoff zu verarbeiten, der z. B. durch mechanische, chemische oder thermische Verfahrensschritte verfestigt wurde. Hier sind bekannt auf dem Gebiete der mechanischen Verfestigung die Nadelfilztechnologie, die Vermaschung (z.B. Malivliesverfahren) sowie die Luft- und Wasserstrahlverfestigung. Auf dem Gebiet der chemischen Verfestigung: Verfestigung durch flüssige Binder, durch Schaumbinder, Pasten- und Pulverbinder sowie Lösungsmittelbinder. Auf dem Gebiete der thermischen Verfestigung bei entsprechend thermoplastischem Fasermaterial lassen sich Heißluft, Kontakthitze mit Druck, Infrarot-Beheizung und ein Hochfrequenzfeld beispielsweise einsetzen.

Als Vliese eignen sich neben den Spinnfaservliesen auch sogenannte Filamentvliese, die unterteilt werden in durch abgelegte Filamente (Endlosfasern) gebildete Vliesstoffe, sogenannte spun-bondeds, oder aber durch abgelegte Fasern nach dem Melt-Blown-Prinzip gebildete Vliesstoffe. Auch hier kann das Verfestigen der Vliesstoffe nach den bereits beschriebenen Methoden erfolgen.

Eine besonders kostengünstige Einbindung von Vliesstoffen kann in ein Gewebe aus Bändchenmaterial vorgenommen werden. Bändchenmaterial, das in der Textiltechnik bekannt und in vielen Fällen eingesetzt wird, wird in der Regel nach dem Flachfolienextrusionsverfahren hergestellt, wobei die extrudierte Flachfolie in Bändchen entsprechender Breite geschnitten wird.

Der Vliesstoff kann auch in einem Gewebe oder Gewirke aus Filamentgarn oder Fasergarn eingebunden sein. Unter Filamentgarn versteht man ein Garn, das aus mehreren Endlosfäden mit oder ohne Drehung besteht, wobei die Endlosfäden auch eine texturierte Form haben können. Bei letzteren wird in einem Texturierprozeß dem ansonsten sehr glatten Filamentgarn ein textiles Aussehen verliehen, indem man dem Filamentgarn einen hohen Bausch verleiht. Auch hier können als Rohstoffe sowohl Polyolefine als auch Polyamide oder Polyester verwendet werden.

Unter Fasergarnen, insbesondere Stapelfasergarnen, werden solche verstanden, die aus Fasern entsprechender Länge hergestellt werden, die nach dem Ringspinn- oder dem Rotorspinn-Verfahren hergestellt werden. Auch hier eignen sich Polyolefine (PP, PE), Polyamide und Polyester als Rohstoffe.

Die Rückenschicht, bei der ein Vliesstoff in eine Textilbindung eingefaßt ist, läßt sich nach verschiedenen Verfahren herstellen. Als Beispiel seien genannt das Kettenwirkverfahren, das sogenannte Maliwatt-Verfahren mit Schußeintrag und die Nadelfilztechnik.

Die beiden erstgenannten Verfahren arbeiten mit einem Längsfadensystem, das dem flächigen Gebilde Rückenschicht Stabilität in Längsrichtung gibt. Das Längsfadensystem besteht aus dem genannten Bändchenmaterial, Filament- oder Fasergarn und wird mit einer üblichen Maschenbildungskonstruktion eingearbeitet. Wahlweise kann bei beiden Verfahren auch ein Querfadensystem eingebracht werden. Dieses System soll in erster Linie die Stabilität in Querrichtung für eine mögliche spätere Teppichverspannung aufbringen. In zweiter Linie wird das Querfadensystem für textile Gestaltung, insbesondere Musterung benutzt. Weiterhin kann das Querfadensystem die Haftung zum Rohteppich in besonderem Maße erhöhen, wenn die Querfäden in Verbindung mit dem Vlies zur Unterseite des Rohteppichs aufgebracht werden.

Ausführungsbeispiele der Erfindung sind in der Zeichnung dargestellt. Die Figuren der Zeichnung zeigen in schematischer Ansicht je drei Schichten eines Textilverbundstoffes, hier Fußbodenbelag, in zwei Ausführungen:

Die schematische Darstellung zeigt ein Grundgewebe 1, welches den Pol 2 während des Tuftingprozesses aufnimmt. Dieser Pol 2 kann einmal als geschlossene Schlinge 5 oder auch als aufgeschnitte Noppe (Velours 4) vorliegen.

Anstelle der sonst üblichen Rückenschicht aus SB-Latex ist in erster Version ein Vliesstoff, vernadelt mit einem Gewebe 7 auf dem Rohteppich mittels einer Klebemasse 3 (z.B. polymere Pasten) aufgebracht. Das aufgenadelte Gewebe soll dem Vliesstoff 6 einerseits die nötige Längs- und Querterfestigkeit und andererseits ein gewebeähnliches Aussehen verleihen.

Durch Zumischung von leitfähigen Fasern 10 bei der Vliesherstellung wird der Oberflächenwiderstand auf ≤10° Ohm herabgesetzt. Die Kombination aus einem leitfähigen Zweitrücken und einer entsprechend ausgerüsteten Teppichstruktion ergibt einen erdableitfähigen Fußbodenbelag.

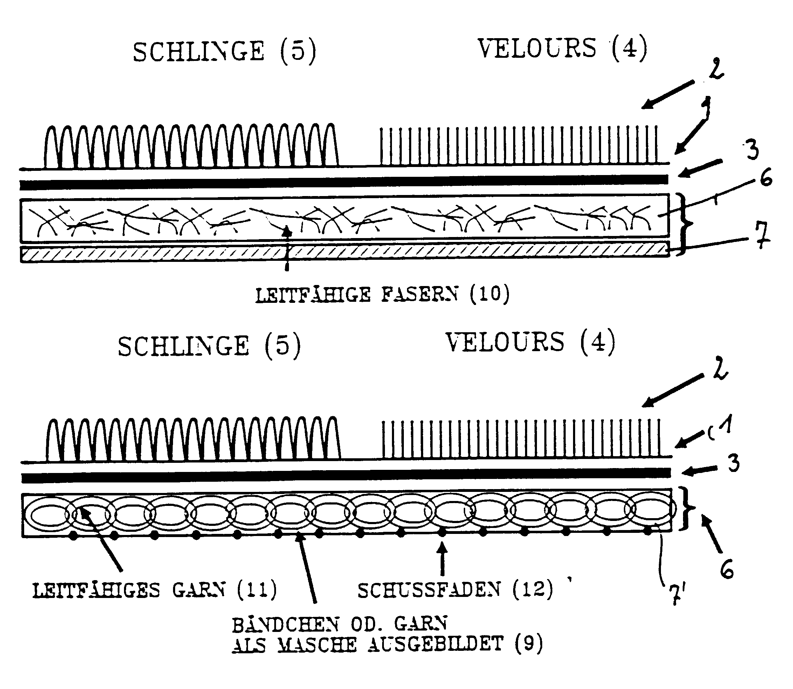

Eine weitere Möglichkeit zur Zweitrückenherstellung stellt das zusätzliche Vermaschen eines nichtverfestigten oder vorverfestigten Vliesstoffes 6 dar, wie in der Figur 2 dargestellt. Das Verfestigen durch einen Maschenbildungsvorgang kann entweder nach dem Malimo-Prinzip oder nach dem Kettenwirk-Prinzip erfolgen. Durch diese Prozesse wird eine Stabilität in Längsrichtung eingebracht, wobei zusätzlich für eine Erhöhung der Querfestigkeit und als eine gestalterische Komponente in Querrichtung ein Schußfaden 12 eingelegt werden kann. Ein zusätzliches Einbinden leitfähiger Garne oder Bändchen 11 bewirkt, daß der Textilverbundstoff in seinem Oberflächenwiderstand auf ≤10° Ohm herabgesetzt wird. Auch diese Art von Zweitrücken ergibt in Kombination mit einer entsprechenden Teppichkonstruktion einen erdableitfähigen Fußbodenbelag.

Abschließend sei darauf hingewiesen, daß die Materialien recyclingfähig und untereinander recycling-kompatibel sein müssen. Das bedeutet entweder, daß sie aus denselben Grundstoffen, also beispielsweise Polypropylen, Polyamid oder Polyethylen, bestehen oder aber durch sogenannte Compatibilisizer so konditioniert werden, daß sie miteinander vermischbar sind. Es ist auch möglich, durch sogenanntes Blending (Vermischen) eine gewisse Menge an jungfräulichem Grundmaterial mit einer entsprechenden kleineren Menge von Recyclingmaterial zu kombinieren, um die Festigkeitseigenschaften zu verbessern.

Neben dem Ausführungsbeispiel lassen sich auch andere Textilbindungen angeben, wie sie bereits in der Beschreibungseinleitung genannt worden sind.

## Patentansprüche

1. Spannbarer textiler Fußbodenbelag, bestehend aus einem Grundgewebe (1) und einem Flor (2), der mit dem Grundgewebe (1) verbunden ist und der das Grundgewebe auf der Trittseite bedeckt, die aus Polymerfasern im Tufting-Verfahren hergestellt sind, sowie aus einer Rückenschicht (6+7), die auf der dem Flor gegenüberliegenden Seite ("Rückseite") mit dem Grundgewebe verbunden ist und die den Trittkomfort bestimmt,
dadurch gekennzeichnet, daß
die Rückenschicht ein Verbundstoff ist, der hauptanteilig aus einem Vliesstoff (6) besteht, der in ein Bändchen-, Filament- oder Fasergarn-Gewebe oder -Gewirke eingefaßt ist,
und daß unter Anwendung einer die Recyclingfähigkeit des Fußbodenbelages nicht verhindernden Technik Grundgewebe und Rückenschicht miteinander verbunden sind.

2. Fußbodenbelag nach Anspruch 1, dadurch gekennzeichnet, daß der Vliesstoff (6) im nichtgefaßten Zustand ein Flächengewicht von 100 bis 400 g/m und eine Dicke von 0,5 bis 10 mm aufweist.

3. Fußbodenbelag nach Anspruch 1 oder 2, dadurch gekennzeichnet, daß der Vliesstoff durch ein Maschengebilde oder ein Gewebe in Längs- und Querrichtung gefaßt ist.

4. Fußbodenbelag nach Anspruch 1 oder 2 oder 3, dadurch gekennzeichnet, daß der Vliesstoff mit Längsfäden (12) vermascht ist.

5. Fußbodenbelag nach Anspruch 3, dadurch gekennzeichnet, daß das einfassende Gewebe ein Drehergewebe ist.

6. Fußbodenbelag nach Anspruch 3, dadurch gekennzeichnet, daß das Maschengebilde ein Ketten- oder Nähgewirke (7') ist.

7. Fußbodenbelag nach Anspruch 3, dadurch gekennzeichnet, daß der Vliesstoff (6) mittels Kettenwirk- und/oder Maliwattverfahren vermascht ist.

8. Fußbodenlag nach Anspruch 1, dadurch kennzeichnet, daß die Bändchen für das Gewebe- oder Gewirke aus der Gruppe der Polymere Polypropylen, Polyethylen, Polyamid oder Polyester gewählt sind.

9. Fußbodenbelag nach einem der vorhergehenden Ansprüche, dadurch gekennzeichnet, daß der Vliesstoff vor dem Einfassen chemisch verfestigt ist.

10. Fußbodenbelag nach einem der vorhergehenden Ansprüche, dadurch gekennzeichnet, daß der Vliesstoff vor dem Einfassen thermisch verfestigt ist.

11. Fußbodenbelag nach einem der vorhergehenden Ansprüche, dadurch gekennzeichnet, daß der Vliesstoff z.B. durch Nadelfilz- oder Malivliestechnik mechanisch verfestigt ist

## Claims

1. A clampable textile floor covering consisting of: a base weave (1) and a pile (2) connected thereto and covering it on the tread side, the weave (1) and pile (2) being produced from polymer fibres by-tufting; and a backing layer (6+7) which is connected to the base weave on the side remote from the pile - i.e., on the reverse side - and which determines treadability,
characterised in that
the backing layer is a composite consisting mainly of a non-woven (6) set in a woven or knitted structure of strips or filaments or fibre yarn, and
the base weave and backing layer are interconnected by means of a technology not impairing the suitability of the floor covering for recycling.

2. A floor covering according to claim 1, characterised in that in the unset state the nonwoven (6) has a weight of 100 to 400 GSM and a thickness of 0.5 to 10 mm.

3. A floor covering according to claim 1 or 2, characterised in that the nonwoven is set or held longitudinally and transversely by a mesh structure or a weave.

4. A floor covering according to claim 1 or 2 or 3, characterised in that the nonwoven is meshed with longitudinal filaments (12).

5. A floor covering according to claim 3, characterised in that the setting weave is a gauze weave.

6. A floor covering according to claim 3, characterised in that the mesh structure is a warp knit or sewn knit (7').

7. A floor covering according to claim 3, characterised in that the nonwoven (6) is meshed by warp knitting and/or the maliwatt process.

8. A floor covering according to claim 1, characterised in that the strips for the woven or knitted structure are selected from the group of polymers consisting of polypropylene, polyethylene, polyamide or polyester.

9. A floor covering according to any of the previous claims, characterised in that the nonwoven is consolidated chemically before setting.

10. A floor covering according to any of the previous claims, characterised in that the nonwoven is consolidated by heat treatment before setting.

11. A floor covering according to any of the previous claims, characterised in that the nonwoven is consolidated mechanically, for example, by needle felting or by the mali nonwoven technique.

## Revendications

1. Revêtement de sol textile susceptible d'être tendu, qui se compose d'un tissu de base (1) et d'un poil (2) qui est relié au tissu de base (1) et qui recouvre le tissu de base sur le côté de marche, qui sont fabriqués en fibres polymères selon un procédé de tufting, ainsi que d'une couche d'envers (6, 7) qui est reliée au tissu de base sur le côté ("côté d'envers") opposé au poil et qui détermine le confort de la marche,
caractérisé en ce que
la couche d'envers est une étoffe composite qui se compose principalement d'un non-tissé (6) qui est bordé dans un tissu ou un produit maillé formé de petits rubans, de filaments ou d'un fils de fibres, et en ce que
le tissu de base et la couche d'envers sont reliés entre eux en utilisant une technique qui n'empêche pas la possibilité de recyclage du revêtement de sol.

2. Revêtement de sol selon la revendication 1, caractérisé en ce que le poids du non-tissé (6) par unité de surface est, dans l'état non bordé, de 100 à 400 g/m et son épaisseur est de 0,5 à 10 mm.

3. Revêtement de sol selon la revendication 1 ou 2, caractérisé en ce que le non-tissé est bordé dans sa direction longitudinale et sa direction transversale par un produit maillé ou un tissu.

4. Revêtement de sol selon la revendication 1 ou 2 ou 3, caractérisé en ce que le non-tissé est maillé par des fils longitudinaux (12).

5. Revêtement de sol selon la revendication 3, caractérisé en ce que le tissu de bordure est un tissu de gaze.

6. Revêtement de sol selon la revendication 3, caractérisé en ce que le produit maillé est un tissu tricoté en chaîne ou un produit maillé aiguilleté

7. Revêtement de sol selon la revendication 3, caractérisé en ce que le non-tissé (6) est maillé au moyen d'un procédé de tissu tricoté en chaîne ou de ouate Malimo.

8. Revêtement de sol selon la revendication 1, caractérisé en ce que les petits rubans destinés au tissu ou au produit maillé sont choisis dans le groupe formé par les polymères suivants: polypropylène, polyéthylène, polyamide ou polyester.

9. Revêtement de sol selon l'une des revendications précédentes, caractérisé en ce que le non-tissé est stabilisé chimiquement avant d'être bordé.

10. Revêtement de sol selon l'une des revendications précédentes, caractérisé en ce que le non-tissé est stabilisé thermiquement avant d'être bordé.

11. Revêtement de sol selon l'une des revendications précédentes, caractérisé en ce que le non-tissé est stabilisé mécaniquement, par exemple par une technique de feutre aiguilleté, ou de non-tissé Malimo.
